(19) Europäisches Patentamt
European Patent Office
Office européen des brevets

(11) Veröffentlichungsnummer: **0 262 095**
**B1**

(12) # EUROPÄISCHE PATENTSCHRIFT

(45) Veröffentlichungstag der Patentschrift: **27.12.90**

(51) Int. Cl.$^5$: **C09B 31/14,** D06P 1/39

(21) Anmeldenummer: **87810543.6**

(22) Anmeldetag: **21.09.87**

(54) **Anionische Disazoverbindungen.**

(30) Priorität: **23.09.86 DE 3632307**

(43) Veröffentlichungstag der Anmeldung:
**30.03.88 Patentblatt 88/13**

(45) Bekanntmachung des Hinweises auf die Patenterteilung:
**27.12.90 Patentblatt 90/52**

(84) Benannte Vertragsstaaten:
**BE CH DE FR GB IT LI NL SE**

(56) Entgegenhaltungen:
**FR-A-1 063 822**
**GB-A-2 174 405**

(73) Patentinhaber: **SANDOZ AG, Lichtstrasse 35, CH-4002 Basel(CH)**
(84) Benannte Vertragsstaaten: **BE CH FR GB IT LI NL SE**

(73) Patentinhaber: **SANDOZ-PATENT-GMBH, Humboldtstrasse 3, D-7850 Lörrach(DE)**
(84) Benannte Vertragsstaaten: **DE**

(72) Erfinder: **Pedrazzi, Reinhard, Grabenmattweg 59/7, CH-4123 Allschwil(CH)**

**EP 0 262 095 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft sulfogruppenhaltige Disazoverbindungen und ihre Salze, Verfahren zur Herstellung, ihre Verwendung als Direktfarbstoffe und Färbepräparationen davon.

Gegenstand der Erfindung sind folglich Verbindungen, die in einer der möglichen tautomeren Formen der Formel I

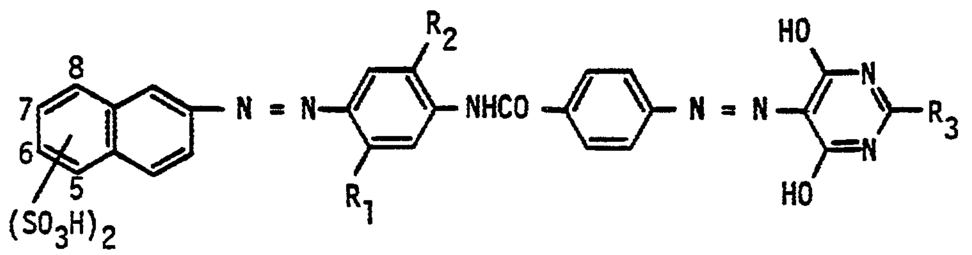

I

entsprechen, oder ein Salz davon, worin
die Sulfogruppen sich in den Stellungen 5,7 oder 6,8 des Naphthylrestes befinden,
$R_1$ für Wasserstoff, Chlor, Methyl, Methoxy, $-NHCOCH_3$ oder $-NHCONH_2$,
$R_2$ für Wasserstoff, Methyl oder Methoxy,
$R_3$ für -NHCN oder $-NHCONH_2$ stehen,
oder ein Gemisch dieser Verbindungen als freie Säure oder in Salzform.

Die beiden Sulfogruppen befinden sich im Naphthylrest bevorzugt in den Stellungen 6,8.
$R_1$ steht bevorzugt für $R_{1a}$ als Wasserstoff, Methyl oder Methoxy;
insbesondere bevorzugt für $R_{1b}$ als Wasserstoff oder Methyl.
$R_2$ steht bevorzugt für $R_{2a}$ als Wasserstoff oder Methoxy.
$R_3$ steht bevorzugt für die Gruppe -NHCN.

Besonders bevorzugt sind Verbindungen der Formel I, worin $R_1$ für $R_{1b}$, $R_2$ für $R_{2a}$ und $R_3$ für -NHCN stehen und die Sulfogruppen im Naphthylrest sich in den Stellungen 6,8 befinden.

Die Verbindungen der Formel I können als freie Säure, als Salz von Alkalimetallen wie Lithium, Natrium oder Kalium, oder als unsubstituiertes oder substituiertes Ammoniumsalz vorliegen, wobei insbesondere auch gemischte Salze möglich sind. In Salzen enthaltend als Kation substituiertes Ammonium, kann sich dieses von einem primären, sekundären oder tertiären Amin ableiten, beispielsweise sind die folgenden Amine geeignet: Mono-, Di- oder Tri-methyl-, -äthyl-, -propyl- oder -butyl-amin; Mono-, Di- oder Tri-äthanol-, -propanol- oder -isopropanol-amin; N-Methyl-N-hydroxyäthylamin, N-Methyl-N,N-di(hydroxyäthyl)amin, N-Aethyl-N-hydroxyäthoxyäthylamin, Morpholin, Piperidin, Piperazin, N-Hydroxyäthylmorpholin, N-Hydroxyäthylpiperazin, N-Aminoäthylpiperazin, Aethylendiamin, Hexamethylendiamin; Dimethylaminopropylamin, Diäthylaminopropylamin, Diäthylenglykolamin, Diglykolamin und 3-Methoxypropylamin.
Als Amine sind auch Polyglykolamine geeignet, die beispielsweise durch Umsetzung von Ammoniak, Alkyl- oder Hydroxyalkylamin mit Alkylenoxiden erhalten werden können.
Als substituiertes Ammoniumion kann auch ein quaternäres Ammoniumion vorliegen, das sich von Ammoniumverbindungen ableitet, die bevorzugt ein oder zwei quaternäre Ammoniumionen enthalten; beispielsweise sind zu nennen: Tetramethyl-, Tetraäthyl-, Trimethyläthyl-, Dimethyl-di(2-hydroxypropyl)-, Trimethylhydroxyäthyl-, Tetrahydroxyäthyl- und Trimethylbenzyl-ammoniumhydroxid.

Die Verbindungen der Formel I oder Gemische davon werden hergestellt, indem man das Diazoniumsalz einer oder mehrerer Aminoazoverbindungen der Formel II,

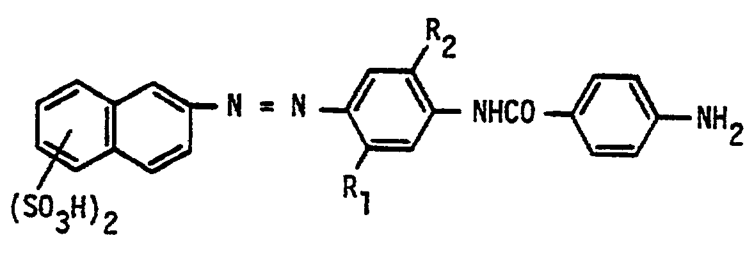

II

worin die Stellung der Sulfogruppen im Naphthylrest, $R_1$ und $R_2$ wie oben definiert sind, mit einer Verbindung, die in einer der möglichen tautomeren Formen der Formel III

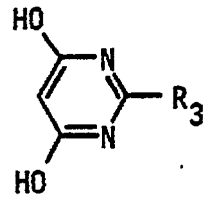

III

entspricht, worin $R_3$ wie oben definiert ist,
oder mit einem Gemisch von Verbindungen der Formel III umsetzt.

Diazotierungs- und Kupplungsreaktion werden nach an sich bekannten Methoden durchgeführt.
Die Diazotierung erfolgt zweckmässig in mineralsaurem, vorzugsweise salzsaurem Medium bei 0-20°C. Die Kupplung wird zweckmässig bei pH 4-12, vorzugsweise bei pH 6-9 durchgeführt.

Die Ausgangsverbindungen der Formeln II und III sind entweder bekannt oder können analog zu an sich bekannten Verfahren aus verfügbaren Ausgangsstoffen hergestellt werden.

Eine gemäss obigem Verfahren resultierende Verbindung der Formel I kann in Form der erhaltenen Lösung an sich verwendet werden; die Lösung kann aber auch durch Sprühtrocknung in den Feststoff übergeführt werden. Weiterhin ist auch die für Farbstoffe übliche Isolierungsmethode, Aussalzen aus der Lösung, Abfiltrieren und Trocknen geeignet.

Die Art der in einer Verbindung der Formel I den Sulfogruppen zugeordneten Kationen kann verfahrensmässig in verschiedener Weise beeinflusst werden. Eine Möglichkeit besteht darin, dass das gemäss obigem Verfahren hergestellte Diazoniumsalz abfiltriert und mit Wasser gewaschen wird. Die feste Diazoniumverbindung wird dann einer wässrigen Aufschlämmung oder Lösung der Kupplungskomponente zugesetzt, die ein basisches Salz, Lithium-, Natrium-, Kalium- oder Ammonium-hydroxid, ein oder mehrere organische Amine oder eine quaternäre Ammoniumverbindung enthält. Eine andere Methode besteht darin, dass die durch Diazo tierung und Kupplung erhaltene und als Natriumsalz isolierte Verbindung der Formel I mit Mineralsäure, bevorzugt Salzsäure, in die freie Säure übergeführt, abfiltriert und mit Wasser gewaschen wird, anschliessend wird neutralisiert und dadurch in das gewünschte Alkalimetall- oder ein beliebiges Ammonium-salz übergeführt. Durch lediglich teilweise Ueberführung in die freie Säure und/oder durch stufenweise Neutralisation lässt sich auch jede Art von Salzgemischen erhalten. Auch die Methode der Umsalzung, die Ueberführung einer Salzform in eine andere, ist anwendbar.
Erfolgt die Diazotierung anstelle von Alkalimetallnitrit mit Alkylnitriten, Distickstofftrioxid oder Gemischen von Stickoxid und Sauerstoff, so ist es möglich, metallionenfreie Lösungen der Endprodukte herzustellen. Gewünschtenfalls können durch Zusatz einer Kationen liefernden Base oder eines Amins entsprechende Salze erhalten werden.

Die erfindungsgemässen Verbindungen in Form ihrer wasserlöslichen Salze finden Verwendung zum Färben oder Bedrucken von hydroxygruppen- oder stickstoffhaltigen organischen Substraten. Sie dienen beispielsweise zum Färben oder Bedrucken von Fasern, Fäden oder daraus hergestellten Textilien, die aus Polyamid oder Cellulosematerial, z.B. Baumwolle, bestehen oder diese enthalten, nach an sich bekannten Methoden; Baumwolle wird dabei vorzugsweise nach dem Ausziehverfahren gefärbt, beispielsweise aus langer oder kurzer Flotte und bei Raum- bis Kochtemperatur.
Das Bedrucken erfolgt durch Imprägnieren mit einer Druckpaste, welche nach an sich bekannter Methode zusammengestellt wird.
Die neuen Farbstoffe können weiter auch zum Färben oder Bedrucken von Leder, vorzugsweise von chromgegerbten Lederarten, sowie zum Färben von Glas oder Glasprodukten, die unterschiedliche chemische Zusammensetzung aufweisen können, nach an sich bekannten Methoden verwendet werden. Ausserdem können die Farbstoffe bei der Herstellung von Tinten nach an sich bekannter Methode eingesetzt werden.

Insbesondere eignen sich die Verbindungen der Formel I jedoch zum Färben oder Bedrucken von Papier, z.B. für die Herstellung von in der Masse gefärbtem, geleimtem oder ungeleimtem Papier. Sie können aber auch zum Färben von Papier nach dem Tauchverfahren verwendet werden. Das Färben und Bedrucken von Papier erfolgt nach bekannten Methoden. Die jeweils erhaltenen Färbungen und Drucke (insbesondere die auf Papier) zeigen gute Gebrauchsechtheiten.
Die Verbindungen der Formel I können auch in Form von Färbepräparaten eingesetzt werden. Diese Anwendungsform ist insbesondere beim Färben von Papier bevorzugt. Die Verarbeitung in stabile flüssige, vorzugsweise wässrige, konzentrierte Färbepräparate kann auf allgemein bekannte Weise erfolgen, vorteilhaft durch Lösen in geeigneten Lösungsmitteln, gegebenenfalls unter Zugabe eines Hilfsmittels, z.B. einer hydrotropen Verbindung oder eines Stabilisators. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffes, indem die Kupplung beispielsweise in Gegenwart dafür geeigneter Amine und insbesondere quaternärer Ammoniumhydroxide, die der Einführung entsprechender Kationen wie weiter oben angeführt dienen, und gegebenenfalls weiterer hydrotroper Hilfsmittel erfolgt.
Geeignete hydrotrope Hilfsmittel sind beispielsweise niedermolekulare Amide, Laktone, Alkohole, Glykole oder Polyole, niedermolekulare Aether oder Oxalkylierungsprodukte sowie Nitrile oder Ester; in Betracht kommen dabei bevorzugt Methanol, Aethanol, Propanol; Aethylen-, Propylen-, Diäthylen-, Thiodiäthylen- und Dipropylen-glykol; Butandiol; ß-Hydroxypropionitril, Pentamethylenglykol, Aethylenglykolmonoäthyl- und -propyläther, Aethylendiglykolmonoäthyläther, Triäthylenglykolmonobutyläther, Butylpolyglykol, Formamid, Dimethylformamid, Pyrrolidon, N-Methylpyrrolidon, Glykolacetat, Butyrolakton, Harnstoff und ε-Caprolactam.

Hydrotrope Verbindungen sind z.B. beschrieben bei H. Rath und S. Müller, Melliand Textilberichte 40, 787 (1959) oder bei E.H. Daruwalla in K. Venkataraman, The Chemistry of Synthetic Dyes, Vol. VIII, S. 86-92 (1974).

Durch den zusätzlichen Gehalt an einer hydrotropen Verbindung lassen sich die Lagerstabilität der Farbstoffzubereitung bzw. die Löslichkeit des eingesetzten Farbstoffes weiter verbessern.

Eine günstige Zusammensetzung solcher flüssigen Präparate ist beispielsweise die folgende (Teile bedeuten Gewichtsteile):

100 Teile einer Verbindung der Formel I als wasserlösliches Salz,
1-100, vorzugsweise 1-10, Teile eines anorganischen Salzes,
100-800 Teile Wasser,
0-500 Teile einer der oben angeführten hydrotropen Verbindungen.

Die flüssigen Präparationen können in Abhängigkeit von der Salzform als Suspension oder auch vorzugsweise als echte Lösungen vorliegen. Die Zubereitungen sind stabil und können über längere Zeit gelagert werden.

Ebenso können die Verbindungen der Formel I auf an sich bekannte Weise zu festen, bevorzugt granulierten Färbepräparaten verarbeitet werden, vorteilhaft durch Granulieren wie in der französischen Patentschrift Nr. 1.581.900 beschrieben.

Eine günstige Zusammensetzung für feste Präparate ist beispielsweise die folgende (Teile bedeuten Gewichtsteile):
100 Teile einer Verbindung der Formel I als wasserlösliches Salz,
1-100, vorzugsweise 1-10, Teile eines anorganischen Salzes,
0-800 Teile eines Stellmittels (vorzugsweise nichtionogen wie Stärke, Dextrin, Zucker, Traubenzucker oder Harnstoff).

In der festen Präparation kann noch bis zu 10% an Restfeuchtigkeit vorhanden sein.

Die Verbindungen der Formel I besitzen je nach den Sulfogruppen zugeordnetem Kation oder Kationgemisch gute Löslichkeitseigenschaften und zeichnen sich dann insbesondere durch gute Kaltwasserlöslichkeit aus. Weiter färben sie die Abwässer bei der Herstellung von geleimtem wie auch ungeleimtem Papier praktisch gar nicht oder nur geringfügig an. Sie melieren auf Papier nicht, sind weitgehend unempfindlich gegen Füllstoff und pH-Schwankungen und neigen nur wenig zur farbigen Papierzweiseitigkeit. Die Färbungen auf Papier zeigen gute Lichtechtheit, nach längerem Belichten ändert sich die Nuance Ton-in-Ton. Die gefärbten Papiere sind sehr gut nassecht gegen Wasser, Milch, Frucht säfte, gesüsste Mineralwasser und Tonicwasser, und besitzen zudem gute Alkoholechtheit. Die Farbstoffe haben hohe Substantivität, d.h. sie ziehen praktisch quantitativ auf und zeigen dabei ein gutes Aufbauvermögen, sie können der Papiermasse direkt, d.h. ohne vorheriges Auflösen, als Trockenpulver oder Granulat zugesetzt werden, ohne dass eine Minderung in der Brillanz oder Verminderung in der Farbausbeute eintritt. Vorteilhaft werden jedoch solche echten Lösungen der Farbstoffe wie oben angeführt eingesetzt, die stabil, von niederer Viskosität und dadurch sehr gut dosierbar sind.

Faserstoffe, die Holzschliff enthalten, werden mit den beschriebenen Farbstoffen in guter und egaler Qualität gefärbt.

Die gefärbten Papiere sind sowohl oxidativ als auch reduktiv bleichbar, was für die Wiederverwendung von Ausschuss- und Altpapier von Wichtigkeit ist.

Die nachfolgenden Beispiele dienen zur Illustration der Erfindung. Sofern nichts anderes angegeben ist, bedeuten in den Beispielen Teile Gewichts- oder Volumteile und Prozente Gewichts- oder Volumprozente, die Temperaturen sind in Celsiusgraden angegeben.

Beispiel 1

43,7 Teile des Aminoazofarbstoffs, hergestellt nach bekannter Methode durch schwach saure Kupplung von diazotierter 2-Amino-naphthalin-6,8-disulfonsäure (30,5 Teile) auf 22 Teile o-Anisidin-ω-methansulfonsäure und anschliessender Verseifung in alkalischem Medium, werden in 400 Teilen Wasser von 80° gelöst. Innert zwei Stunden werden 24 Teile 4-Nitrobenzoylchlorid in kleinen Portionen eingetragen. Dabei hält man den pH durch gleichzeitiges Zutropfen von Natronlauge bei 6-7. Nach Zugabe der letzten Portion lässt man drei Stunden nachrühren und filtriert dann den fast vollständig ausgefallenen Nitroazofarbstoff ab. Er wird mit Sole gut nachgewaschen.

Der erhaltene Presskuchen wird wieder in 400 Teilen Wasser angerührt, auf 50° erwärmt und anschliessend portionenweise mit 35 Teilen kristallisiertem Natriumsulfid versetzt. Infolge exothermer Wärme entwicklung steigt dabei die Temperatur bis 65°. Es entsteht eine Farbstofflösung, in welche 75 Teile Natriumchlorid eingetragen werden, worauf der Farbstoff vollständig ausfällt. Er wird abgesaugt und mit Sole gut nachgewaschen.

Man erhält die Aminoazoverbindung entsprechend der Formel

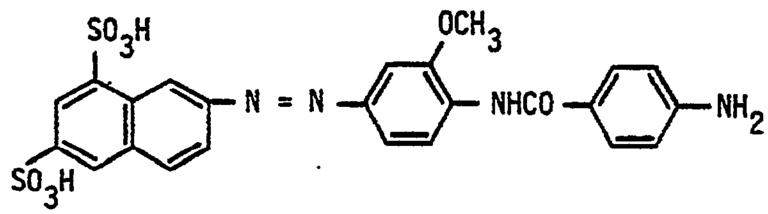

in gutter Ausbeute.
55,6 Teile dieser Verbindung werden in 800 Teilen Wasser gelöst und mit 27 Teilen einer 4N Natriumnitritlösung versetzt. Diese Lösung tropft man in eine Vorlage bestehend aus 50 Teilen 30%iger Salzsäure, 200 Teilen Eis und 150 Teilen Natriumchlorid. Es entsteht eine gut rührbare, dunkle Diazosuspension. Nach der Zugabe lässt man noch eine Stunde nachrühren und zerstört das überschüssige Nitrit mit 1 Teil Sulfaminsäure. Anschliessend trägt man unter gutem Rühren 16 Teile 2-Cyanimino-4,6-dihydroxy-pyrimidin ein und stellt den pH mit Natronlauge auf 7-8. Die Kupplung ist nach zwei Stunden beendet, der resultierende Farbstoff ist fast vollständig ausgefallen. Er wird abfiltriert, mit Sole gewaschen und getrocknet. Man erhält den Farbstoff entsprechend der Formel,

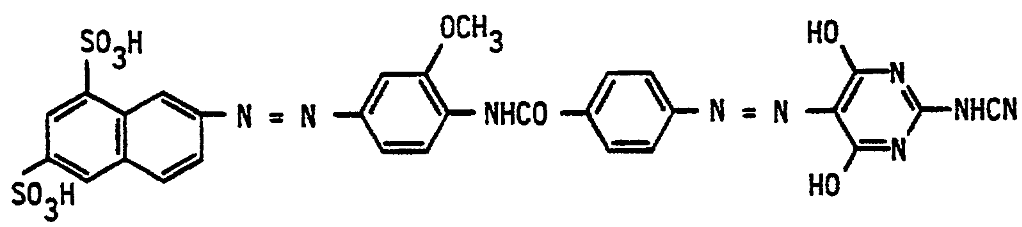

der sehr farbstark ist. Er färbt Papier in brillanten neutralgelben Tönen. Licht- und Nassechtheiten der Färbungen sind sehr gut.

Beispiel 2

Verfährt man wie in Beispiel 1 angegeben und verwendet anstelle von 22 Teilen o-Anisidin-ω-methansulfonsäure 19 Teile Anilin-ω-methansulfonsäure, so erhält man den Farbstoff entsprechend der Formel

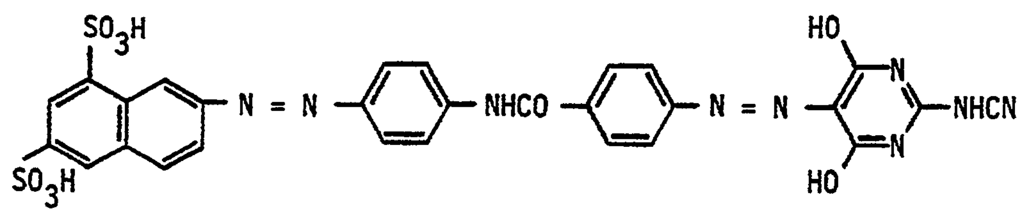

Er färbt Papier in brillanten grünstichig gelben Tönen. Licht- und Nassechtheiten der Färbungen sind sehr gut.

Beispiele 3-16

Analog der in den Beispielen 1 und 2 gezeigten Methode können weitere Verbindungen der Formel I unter Verwendung entsprechender Ausgangsverbindungen hergestellt werden. Für diese Verbindungen sind in der folgenden Tabelle die Symbole angeführt. In der letzten Kolonne ist der Farbton der erhaltenen Papierfärbung angegeben, es bedeutet:

a = grünstichig gelb
b = neutralgelb
c = schwach rotstichig gelb.

Die Färbungen zeigen gute Licht- und Nassechtheiten.

Tabelle

| Bsp.Nr. | Stellung der $SO_3H$ im Naphthylrest | $R_1$ | $R_2$ | $R_3$ | Farbton auf Papier |
|---|---|---|---|---|---|
| 3 | 6,8 | $CH_3$ | H | -NHCN | b |
| 4 | do. | do. | $CH_3$ | do. | b |
| 5 | do. | do. | $OCH_3$ | do. | c |
| 6 | do. | $-NHCOCH_3$ | H | do. | c |
| 7 | do. | $-NHCONH_2$ | H | do. | c |
| 8 | 5,7 | H | H | do. | a |
| 9 | do. | $CH_3$ | H | do. | b |
| 10 | do. | H | $OCH_3$ | do. | b |
| 11 | do. | $-NHCOCH_3$ | H | do. | c |
| 12 | 6,8 | H | H | $-NHCONH_2$ | a |
| 13 | do. | H | $OCH_3$ | do. | b |
| 14 | do. | $CH_3$ | H | do. | b |
| 15 | 5,7 | H | H | do. | a |
| 16 | do. | H | $OCH_3$ | do. | b |

Die Farbstoffe der Beispiele 1-16 fallen aufgrund der gewählten Herstellungsbedingungen als Natriumsalze an und werden als solche isoliert. Sie können jedoch auch in anderer Salzform oder auch gemischter Salzform erhalten werden, indem man nach Ueberführung in die freie Säure mit der (den) das (die) gewünschte(n) Kation(en) enthaltenden Verbindung(en) umsetzt oder das Natriumsalz einer entsprechenden Umsalzung unterwirft, wodurch ein oder mehrere der in der Beschreibung weiter als bevorzugt aufgezählten Kationen eingeführt werden.

Beispiel 17

Der gemäss Beispiel 1 hergestellte Farbstoff wird vor dem Trocknen in 200 Teilen Wasser verrührt und mit 20 Teilen 30%iger Salzsäure versetzt. Nach längerem Rühren wird der Farbstoff in Form der freien Säure abfiltriert und in 15 Teile Triäthanolamin eingetragen. Der Farbstoff geht unter Wärmefreisetzung in Lösung. Man stellt mit Wasser auf 90 Teile ein und erhält so eine gebrauchsfertige, lagerstabile Farbstofflösung.

Beispiel 18

Verwendet man anstelle des in Beispiel 17 eingesetzten Triäthanolamins Lithiumhydroxidlösung, so erhält man ein flüssig-wässriges Färbepräparat, das den Farbstoff gemäss Beispiel 1 als Lithiumsalz enthält.

Analog der in den Beispielen 17 und 18 beschriebenen Methode können auch die Farbstoffe der Beispiele 2-16 in flüssig-wässrige Färbepräparate mit hoher Lagerbeständigkeit übergeführt werden.

Applikationsmöglichkeiten der erfindungsgemässen Verbindungen sowie flüssig-wässrigen Färbepräparaten davon werden in den folgenden Vorschriften illustriert.

Anwendungsbeispiel A

In einem Holländer werden 70 Teile chemisch gebleichte Sulfitcellulose aus Nadelholz und 30 Teile chemisch gebleichte Sulfitcellulose aus Birkenholz in 2000 Teilen Wasser gemahlen. Zu dieser Masse streut man 0,2 Teile des Farbstoffes aus Beispiel 1 oder 2 oder gibt 1,0 Teile des flüssigen Farbstoffpräparates gemäss Beispiel 17 oder 18 zu. Nach 20 Minuten Mischzeit wird daraus Papier hergestellt. Das auf diese Weise erhaltene saugfähige Papier ist neutralgelb (bzw. grünstichig gelb) gefärbt. Das Abwasser ist praktisch farblos.

Anwendungsbeispiel B

0,5 Teile des Farbstoffpulvers aus Beispiel 1 oder 2 werden in 100 Teilen heissem Wasser gelöst und auf Raumtemperatur abgekühlt. Die Lösung gibt man zu 100 Teilen chemisch gebleichter Sulfitcellulose, die mit 2000 Teilen Wasser in einem Holländer gemahlen wurde. Nach 15 Minuten Durchmischung wird auf übliche Art mit Harzleim und Aluminiumsulfat geleimt. Papier, das aus diesem Material hergestellt wird, zeigt einen neutralgelben (bzw. grünstichig gelben) Farbton und besitzt gute Licht-, Abwasser- und Nassechtheiten.

Anwendungsbeispiel C

Eine saugfähige Papierbahn aus ungeleimtem Papier wird bei 40-50° durch eine Farbstofflösung folgender Zusammensetzung gezogen:
0,5 Teile des Farbstoffs aus Beispiel 1 oder 2 oder des Flüssigpräparates aus Beispiel 17 oder 18,
0,5 Teile Stärke und
99,0 Teile Wasser.

Die überschüssige Farbstofflösung wird durch zwei Walzen abgepresst. Die getrocknete Papierbahn ist neutralgelb (bzw. grünstichig gelb) gefärbt.

Auf analoge Weise wie in den Vorschriften A bis C angeführt kann auch mit den Farbstoffen der übrigen Beispiele oder mit einer Färbepräparation davon gefärbt werden. Die erhaltenen Papierfärbungen sind gelb gefärbt und haben ein hohes Echtheitsniveau.

Anwendungsbeispiel D (Leder)

100 Teile zwischengetrocknetes Chromveloursleder werden in einer Flotte aus 400 Teilen Wasser, 2 Teilen 25%iger Ammoniumhydroxidlösung und 0,2 Teilen eines handelsüblichen Netzmittels während einer Stunde bei 50° im Fass gewalkt. Anschliessend wird die Flotte abgelassen. Dem gewalkten, noch feuchten Chromveloursleder werden 400 Teile Wasser von 60° sowie 1 Teil 25%ige Ammoniumhydroxidlösung zugefügt. Nach dem Zu satz von 5 Teilen des Farbstoffes aus Beispiel 1, gelöst in 200 Teilen Wasser, wird 90 Minuten bei 60° gefärbt. Anschliessend werden langsam 50 Teile 8%ige Ameisensäure zugesetzt, um den pH sauer zu stellen. Die Behandlung wird dann noch während weiterer 30 Minuten fortgesetzt. Abschliessend wird das Leder gespült, getrocknet und auf übliche Weise zugerichtet. Die erhaltene gelbe Lederfärbung ist egal gefärbt und zeigt gute Lichtechtheit.

Gemäss analoger Methode wie im Anwendungsbeispiel D beschrieben können auch die Farbstoffe der Beispiele 2-16 für das Färben von Leder eingesetzt werden.

Anwendungsbeispiel E (Baumwolle)

Zu einer Färbeflotte, bestehend aus 3000 Teilen enthärtetem Wasser, 2 Teilen Soda und 1 Teil des Farbstoffes aus Beispiel 1, werden bei 30° 100 Teile vorgenetztes Baumwollgewebe gegeben. Nach Zusatz von 10 Teilen Glaubersalz wird die Flotte innerhalb von 30 Minuten auf Siedetemperatur erhitzt, wobei während dieses Aufheizvorganges auf den Temperaturstufen 50° und 70° jeweils weitere 10 Teile Glaubersalz zugefügt werden. Das Färben wird dann noch weitere 15 Minuten bei Siedetemperatur fortgesetzt, abschliessend werden 10 Teile Glaubersalz zugegeben. Man lässt das Färbebad dann abkühlen. Bei 50° wird das gefärbte Gewebe aus der Flotte entfernt, mit Wasser gespült und bei 60° getrocknet. Man erhält eine neutralgelbe Baumwollfärbung von guten Licht- und Nassechtheiten.

In ähnlicher Weise wie im Anwendungsbeispiel E beschrieben können auch die Farbstoffe der Beispiele 2-16 für das Färben von Baumwolle Verwendung finden.

**Patentansprüche**

1. Verbindungen, die in einer der möglichen tautomeren Formen der Formel I

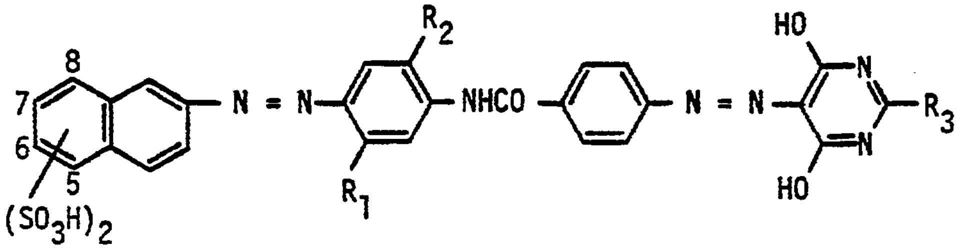

I

entsprechen, oder ein Salz davon, worin
die Sulfogruppen sich in den Stellungen 5,7 oder 6,8 des Naphthylrestes befinden,
$R_1$ für Wasserstoff, Chlor, Methyl, Methoxy, $-NHCOCH_3$ oder $-NHCONH_2$,
$R_2$ für Wasserstoff, Methyl oder Methoxy, und
$R_3$ für -NHCN oder $-NHCONH_2$ stehen,
oder ein Gemisch von Verbindungen der Formel I als freie Säure oder in Salzform.

2. Verbindungen gemäss Anspruch 1, worin die Sulfogruppen sich in den Stellungen 6,8 des Naphthylrestes befinden.

3. Verbindungen gemäss Anspruch 1 oder 2, worin
$R_1$ für Wasserstoff oder Methyl,
$R_2$ für Wasserstoff oder Methoxy, und
$R_3$ für -NHCN
stehen.

4. Verfahren zur Herstellung von Verbindungen der Formel I, definiert in Anspruch 1, oder Gemischen davon, dadurch gekennzeichnet, dass man das Diazoniumsalz einer oder mehrerer Aminoazoverbindungen der Formel II,

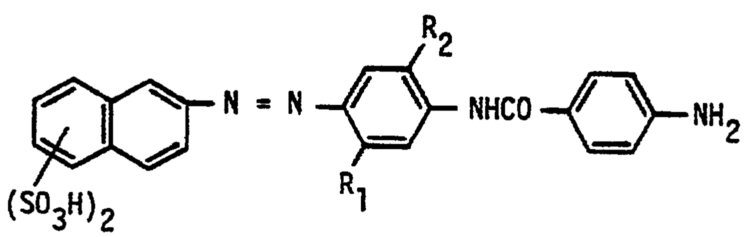

II

worin die Stellung der Sulfogruppen im Naphthylrest, $R_1$ und $R_2$ wie in Anspruch 1 definiert sind, mit einer Verbindung, die in einer der möglichen tautomeren Formen der Formel III

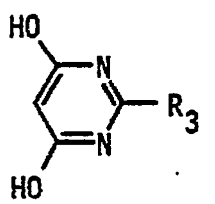

III

entspricht, worin $R_3$ wie in Anspruch 1 definiert ist, oder mit einem Gemisch von Verbindungen der Formel III umsetzt.

5. Lagerstabile, flüssig-wässrige Farbstoffpräparation enthaltend eine Verbindung der Formel I, definiert in Anspruch 1, in wasserlöslicher Salzform.

6. Wasserlösliche feste, gegebenenfalls granulierte Farbstoffpräparation enthaltend eine Verbindung der Formel I, definiert in Anspruch 1, in wasserlöslicher Salzform.

7. Verfahren zum Färben oder Bedrucken von hydroxygruppen- oder stickstoffhaltigen organischen Substraten, dadurch gekennzeichnet, dass man mit einer Verbindung der Formel I, definiert in Anspruch 1, in wasserlöslicher Salzform oder mit einer Präparation gemäss Anspruch 5 oder 6 färbt oder bedruckt.

8. Verfahren zum Färben oder Bedrucken gemäss Anspruch 7, bei welchem als Substrat Papier, Leder oder Textilmaterial, das aus Cellulose oder Polyamid besteht oder diese enthält, eingesetzt wird.

9. Verfahren zum Färben von Glas oder Glasprodukten, dadurch gekennzeichnet, dass man mit einer Verbindung der Formel I, definiert in Anspruch 1, färbt.

10. Verfahren zur Herstellung von Tinten, dadurch gekennzeichnet, dass man dazu eine Verbindung der Formel I, definiert in Anspruch 1, einsetzt.

**Claims**

1. Compounds which, in one of the possible tautomeric forms, correspond to formula I

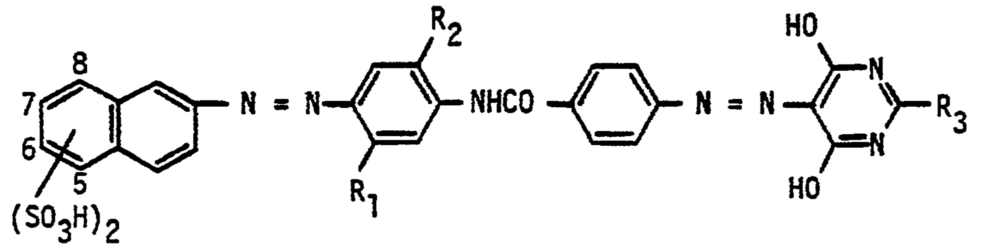

I

or a salt thereof, in which the sulpho groups are in the 5,7- or 6,8-positions of the naphthyl radical,
$R_1$ is hydrogen, chlorine, methyl, methoxy, $-NHCOCH_3$ or $-NHCONH_2$,
$R_2$ is hydrogen, methyl or methoxy, and
$R_3$ is $-NHCN$ or $-NHCONH_2$, or a mixture of compounds of formula I which are in free acid or salt form.

2. Compounds according to Claim 1, in which the sulpho groups are in the 6,8-positions of the naphthyl radical.

3. Compounds according to Claim 1 or 2, in which
$R_1$ is hydrogen or methyl,
$R_2$ is hydrogen or methoxy, and
$R_3$ is $-NHCN$.

4. A process for the preparation of compounds of formula I, defined in Claim 1, or mixtures thereof, characterised by reacting the diazonium salt of one or more aminoazo compounds of formula II,

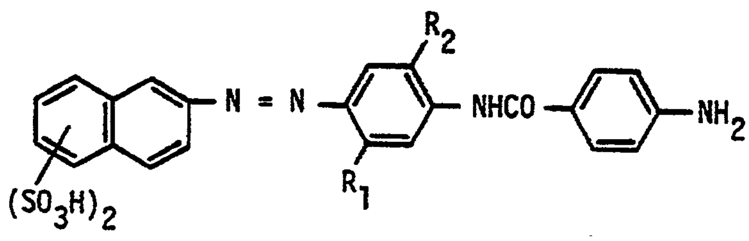

II

in which the positions of the sulpho groups in the naphthyl radical and $R_1$ and $R_2$ are as defined in Claim 1, with a compound which in one of the possible tautomeric forms corresponds to formula III,

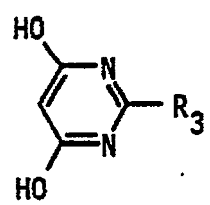

III

in which $R_3$ is as defined in Claim 1, or with a mixture of compounds of formula III.

5. A storage-stable, liquid-aqueous dyestuff preparation containing a compound of formula I, defined in Claim 1, in water-soluble salt form.

6. A water-soluble solid and optionally granulated dyestuff preparation containing a compound of formula I, defined in Claim 1, in water-soluble salt form.

7. A process for dyeing or printing of hydroxy group- or nitrogen-containing organic substrates, characterised by dyeing or printing with a compound of formula I, defined in Claim 1, in water-soluble salt form or with a preparation according to Claim 5 or 6.

8. A process for dyeing or printing according to Claim 7, in which the substrate is paper, leather or textile material which comprises cellulose or polyamide.

9. A process for dyeing glass or glass products, characterised by dyeing with a compound of formula I defined in Claim 1.

10. A process for the preparation of inks, characterised by using a compound of formula I defined in Claim 1.

**Revendications**

1. Les composés qui correspondent, sous l'une des formes tautomères possibles, à la formule I

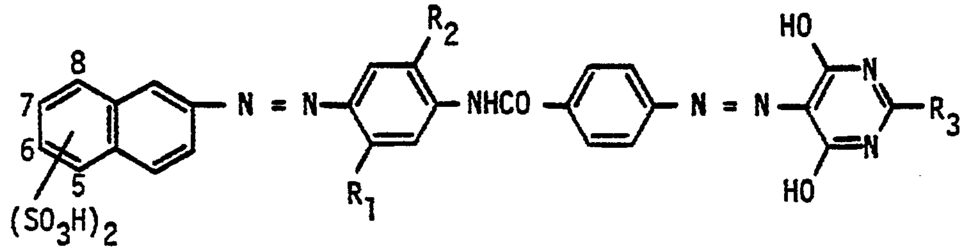

I

ou un de leurs sels, formule dans laquelle les groupes sulfo sont situés en position 5,7 ou 6,8 du reste naphtyle,
$R_1$ signifie l'hydrogène, le chlore, méthyle, méthoxy, $-NHCOCH_3$ ou $-NHCONH_2$,
$R_2$ signifie l'hydrogène, méthyle ou méthoxy, et
$R_3$ signifie $-NHCN$ ou $-NHCONH_2$, ou un mélange de composés de formule I sous forme d'acide libre ou d'un sel.

2. Les composés selon la revendication 1, dans lesquels les groupes sulfo sont situés en position 6,8 du reste naphtyle.

3. Les composés selon la revendication 1 ou 2, dans lesquels
$R_1$ signifie l'hydrogène ou méthyle,
$R_2$ signifie l'hydrogène ou méthoxy, et
$R_3$ signifie $-NHCN$.

4. Un procédé de préparation des composés de formule I, définis à la revendication 1, ou leurs mélanges, caractérisé en ce qu'on fait réagir le sel de diazonium d'un ou de plusieurs composés aminoazoïques de formule II

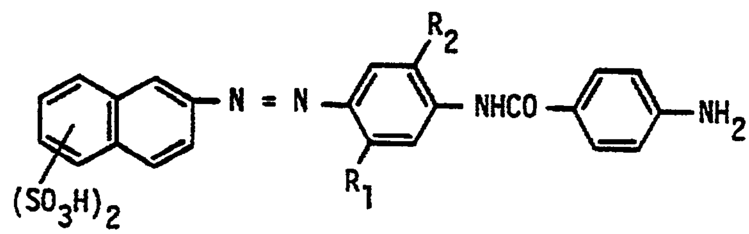

II

dans laquelle la position des groupes sulfo dans le reste naphtyle, ainsi que $R_1$ et $R_2$ sont tels que définis à la revendication 1, avec un composé qui correspond, sous l'une des formes tautomères possibles, à la formule III

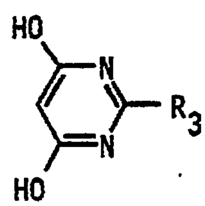

III

dans laquelle $R_3$ est tel que défini à la revendication 1, ou avec un mélange de composés de formule III.

5. Une préparation tinctoriale liquide, aqueuse et stable au stockage, comprenant un composé de formule I tel que défini à la revendication 1, sous forme d'un sel hydrosoluble.

6. Une préparation tinctoriale solide et hydrosoluble, éventuellement sous forme de granulés, comprenant un composé de formule I tel que défini à la revendication 1, sous forme d'un sel hydrosoluble.

7. Un procédé de teinture ou d'impression de substrats organique contenant des groupes hydroxy ou de l'azote, caractérisé en ce qu'on teint ou on imprime avec un composé de formule I, tel que défini à la

revendication 1, sous forme d'un sel hydrosoluble ou avec une préparation selon la revendication 5 ou 6.

8. Un procédé de teinture ou d'impression selon la revendication 7, dans lequel on utilise, comme substrat, du papier, du cuir ou une matière textile qui est constituée de cellulose ou de polyamide ou qui en contient.

9. Un procédé de teinture du verre ou de produits à base de verre, caractérisé en ce qu'on teint avec un composé de formule I tel que défini à la revendication 1.

10. Un procédé de préparation d'encres, caractérisé en ce qu'on y incorpore un composé de formule I tel que défini à la revendication 1.